(19) Europäisches Patentamt
European Patent Office
Office européen des brevets

(11) EP 2 271 013 B1

(12) EUROPÄISCHE PATENTSCHRIFT

(45) Veröffentlichungstag und Bekanntmachung des Hinweises auf die Patenterteilung:
12.02.2020  Patentblatt 2020/07

(21) Anmeldenummer: 10006742.0

(22) Anmeldetag: 30.06.2010

(51) Int Cl.:
H04L 5/00 (2006.01)      H04J 14/02 (2006.01)
H04L 27/20 (2006.01)     H04J 14/06 (2006.01)

(54) **Netzwerkvorrichtung**

Network device

Dispositif de réseau

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.06.2009  DE 102009031307**

(43) Veröffentlichungstag der Anmeldung:
**05.01.2011  Patentblatt 2011/01**

(73) Patentinhaber: **Deutsche Telekom AG**
**53113 Bonn (DE)**

(72) Erfinder:
• **Gunkel, Mathias, Dr.**
**64291 Darmstadt (DE)**
• **Leibrich, Jochen, Dr.**
**24145 Kiel (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**WO-A1-2008/112685      US-A1- 2009 097 852**

• **QI YANG ET AL: "Experimental Demonstration and Numerical Simulation of 107-Gb/s High Spectral Efficiency Coherent Optical OFDM", JOURNAL OF LIGHTWAVE TECHNOLOGY, IEEE SERVICE CENTER, NEW YORK, NY, US, Bd. 27, Nr. 3, 1. Februar 2009 (2009-02-01), Seiten 168-176, XP011251722, ISSN: 0733-8724**

EP 2 271 013 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft das Gebiet der Datenübertragung im orthogonalen Frequenzmultiplex über optische Kommunikationsnetzwerke.

Es ist davon auszugehen, dass in zukünftigen Transportnetzen eine Gesamtkapazität im Terabit/Sekunde-Bereich über eine einzige Glasfaser übertragen werden muss. Diese Schätzung der Gesamtkapazität ergibt sich als logischer Schritt aus den erwarteten Kapazitätssprüngen beim Ethernet-Transport, welcher in wenigen Jahren bei voraussichtlich 1 Tb/s pro Kanal liegen wird. Eine solche Kanaldatenrate übertrifft bei Weitem die mit den derzeitigen Kommunikationstechnologien erzielbaren Kanaldatenraten, welche im Bereich zwischen 10 und 40 Gb/s und in näherer Zukunft voraussichtlich 100 Gb/s über dedizierte, jedoch unkorrelierte WDM-Kanäle realisiert werden (WDM: Wavelength Division Multiplex). Die einzelnen WDM-Kanäle müssen dabei einen deutlichen spektralen Abstand aufweisen, um eine empfängerseitige Kanaltrennung vornehmen zu können - die Lücken zwischen den Kanälen bleiben jedoch ungenutzt. Ferner ist aufgrund der derzeit verfügbaren Kanalbandbreite die klassische Realisierung einer Terabit/s-Transportkapazität derzeit sehr aufwändig und daher teuer. Darüber hinaus ist bei der Verwendung von unkorrelierten WDM-Kanälen die Flexibilität für den Transport verschiedener Granularitäten aufgrund einer vergleichsweisen starren Zuordnung von Sende- und Empfangsknoten in dem jeweiligen optischen Netzwerk gering.

Seit Kurzem hat daher die aus der Funktechnik oder aus dem DSL-Bereich (DSL: Digital Subscriber Line) bekannte OFDM-Modulation (OFDM: Orthogonal Frequency Division Multiplexing, orthogonaler Frequenzmultiplex) auch im Bereich der optischen Übertragungstechnik Einzug gehalten. Die optische OFDM (O-OFDM) hat in den letzten Jahren deutliche Fortschritte gemacht und wird als eine attraktive Lösung angesehen insbesondere wegen der flexiblen und kostenreduzierten Möglichkeiten der digitalen Signalverarbeitung. So können einzelne WDM-Kanäle OFDM-moduliert werden, wodurch deutliche Verbesserungen hinsichtlich der Kompensation der Dispersion, insbesondere der chromatischen Dispersion oder der Polarisationsmodendispersion, erzielbar sind. Auch die Spektraleffizienz wird durch OFDM gegenüber den bisher verwendeten Verfahren deutlich erhöht, weil die Adaptionsfähigkeit eines OFDM-Übertragungssystems an verschiedene Datenraten aufgrund der digitalen Signalverarbeitung relativ einfach realisierbar ist. Insgesamt wird OFDM jedoch in allen Fällen als ein reines Modulationsformat betrachtet, das beispielsweise eine RZ- (Non-Return-to-Zero), eine CS-RZ- (Carrier Suppressed Return-to-Zero) oder eine DQPSK-(Differential Quaternary Phase Shift Keying) Modulation ersetzen kann.

Der Einsatz der OFDM-Modulation im Bereich der optischen Übertragungstechnik ist zum Beispiel bekannt aus WO 2008/112685 A1, US 2009/097852 A1 und aus QI YANG ET AL: "Experimental Demonstration and Numerical Simulation of 107-Gb/s High Spectral Efficiency Coherent Optical OFDM", JOURNAL OF LIGHTWAVE TECHNOLOGY, IEEE SERVICE CENTER, NEW YORK, NY, US, Bd. 27, Nr. 3, 1. Februar 2009, Seiten 168-176, ISSN: 0733-8724.

Zur Übertragung von Signalen im orthogonalen Frequenzmultiplex kann ferner der bekannte OBM-OFDM-Ansatz (OBM-OFDM: Orthogonal Band Multiplexed OFDM) eingesetzt werden. Dabei wird aus einer einzelnen Quelle eine Vielzahl unmodulierter optischer WDM-Träger erzeugt, welche untereinander korreliert und jeweils zueinander orthogonal sind, was beispielsweise unter Verwendung eines RFC (RFC: Recirculating Frequency Shifter Loop) realisiert werden kann. Die unmodulierten WDM-Träger werden anschließend einzeln OFDM-moduliert.

Mit einem kohärenten optischen OFDM-Empfänger (CO-OFDM) können die einzelnen Bänder ferner frequenzselektiv mit ihren OFDM-Subträgern herausgetrennt und ausgewertet werden, so dass eine Übertragung im Terabit/s-Bereich prinzipiell möglich ist. Die bekannten OBM-OFDM-Ansätze sind jedoch als reine Punkt-zu-Punkt-Systeme ausgelegt. Ferner ist eine Downstream-Übertragung in einem PON-Zugangsnetz (PON: passives optisches Netz) ist unter Verwendung der bekannten OBM-OFDM-Ansätze nicht möglich.

Es ist daher die Aufgabe der vorliegenden Erfindung, ein effizientes Konzept für die Downstream-Übertragung in optischen Kommunikationsnetzen zu schaffen, dass die Verwendung des OBM-OFDM-Modulationsschemas ermöglicht.

Diese Aufgabe wird durch die Merkmale der unabhängigen Ansprüche gelöst. Vorteilhafte Ausführungsformen sind Gegenstand der abhängigen Ansprüche.

Ausführungsformen, die nicht unter die vorliegenden Ansprüche fallen, sind nicht Teil der Erfindung, sondern Beispiele, die das Verständnis der Erfindung erleichtern.

Die vorliegende Erfindung basiert auf der Erkenntnis, dass die einzelnen OFDM-Subträger unterschiedlicher WDM-Träger zwischen einer Sende- und einer Empfangsseite flexibel insbesondere mit Blick auf ein PON-Zugangssystem im Sinne einer dynamisch veränderlichen Kapazität der einzelnen ONUs (ONU: Optical Network Unit) zugeordnet werden können. Insbesondere kann ein Lokallaser auf eine Mittenfrequenz eines gewünschten Spektrums eingestimmt werden, so dass die nicht auszuwertenden OFDM-Subträger in das elektrische Basisband, beispielsweise homodyn oder intradyn, fallen, oder ein einfach verarbeitbares, elektrisches ZF-Band (ZF: Zwischenfrequenz) beispielsweise heterodyn entsteht. Anschließend können nur diejenigen Daten digital weiterverarbeitet werden, die für das jeweilige OFDM-Empfangsmodul bestimmt sind.

Gemäß einem Aspekt betrifft die Erfindung eine Netzwerkvorrichtung, insbesondere eine optische Netzwerkvorrichtung, zum Modulieren einer Mehrzahl von Netzwerkteilnehmersignalen, welche unterschiedlichen Netzwerkteilnehmern zugeordnet sind, gemäß dem OFDM-Modulationsschema. Die Netzwerkvorrichtung umfasst eine Zuordnungseinrichtung zum Zuordnen einer ersten Gruppe von Subträgern zu einem ersten Netzwerkteilnehmersignal oder zu dem ersten Netzwerkteilnehmersignal und zu einem Abschnitt eines zweiten Netzwerkteilnehmersignals, und zum Zuordnen einer zweiten Gruppe von Subträgern zu dem zweiten Netzwerkteilnehmersignal oder zu einem ggf. verbleibenden Abschnitt des zweiten Netzwerkteilnehmersignals.

Die Netzwerkvorrichtung umfasst ferner eine Modulationseinrichtung zum Modulieren des ersten Netzwerkteilnehmersignals auf die erste Gruppe von Subträgern unter Verwendung der inversen Fourier-Transformation oder zum Modulieren des ersten Netzwerkteilnehmersignals und des Abschnitts des zweiten Netzwerkteilnehmersignals auf die erste Gruppe von Subträgern unter Verwendung der inversen Fourier-Transformation, um ein erstes Multiträgersignal zu erhalten, und zum Modulieren des zweiten Netzwerkteilnehmersignals oder eines Abschnitts des zweiten Netzwerkteilnehmersignals auf die zweite Gruppe von Subträgern unter Verwendung der inversen Fourier-Transformation, um ein zweites Multiträgersignal zu erhalten. Die beiden Gruppen von Subträgern werden bevorzugt separat moduliert, so dass das erste und das zweite Multiträgersignal separate Multiträgersignale sind. Das zweite Netzwerkteilnehmersignal kann somit separat oder teilweise zusammen mit dem ersten Netzwerkteilnehmersignal moduliert werden.

Gemäß einer Ausführungsform weisen die erste Gruppe von Subträgern und die zweite Gruppe von Subträgern jeweils aufeinander folgende Subträger auf. Darüber hinaus können die beiden Gruppen von Subträgern insgesamt aufeinander folgende Subträger aufweisen.

Gemäß einer Ausführungsform ist die Netzwerkeinrichtung ausgebildet, die Mehrzahl der Netzwerkteilnehmersignale oder die Gruppen von Subträgern gemäß dem OBM-OFDM-Schema zu modulieren.

Gemäß einer Ausführungsform umfasst die Modulationseinrichtung einen ersten OFDM-Modulator zum Modulieren des ersten Netzwerkteilnehmersignals und einen zweiten OFDM-Modulator zum Modulieren des zweiten Netzwerkteilnehmersignals. Somit werden die Netzwerkteilnehmersignale jeweils für sich und separat unter Verwendung des OFDM-Schemas verarbeitet.

Gemäß einer Ausführungsform ist die Zuordnungseinrichtung ausgebildet, eine Anzahl von Subträgern der ersten Gruppe von Subträgern und/oder eine Anzahl von Subträgern der zweiten Gruppe von Subträgern innerhalb einer vorgegebenen Gesamtzahl von Subträgern zu bestimmen, beispielsweise adaptiv oder gemeinsam oder flexibel oder dynamisch oder temporär, zu bestimmen. Die Anzahl der Subträger in der jeweiligen Gruppe kann somit dynamisch verändert werden.

Gemäß einer Ausführungsform ist die Zuordnungseinrichtung ausgebildet, eine Anzahl von dem ersten Netzwerkteilnehmersignal zugeordneten Subträger dem zweiten Netzwerkteilnehmersignal zuzuordnen, falls zum Modulieren des zweiten Netzwerkteilnehmersignals eine erhöhte Anzahl von Subträgern notwendig ist, und/oder falls zum Modulieren des ersten Netzwerkteilnehmersignals eine verringerte Anzahl von Subträgern ausreichend ist. Somit werden die Subträger dem Bedarf nach entweder der ersten oder der zweiten Gruppe zugeordnet.

Gemäß einer Ausführungsform umfasst die Netzwerkvorrichtung eine optische Sendeeinrichtung zum Erzeugen eines optischen Sendesignals aus dem ersten Multiträgersignal und dem zweiten Multiträgersignal.

Gemäß einer Ausführungsform umfasst die optische Sendeeinrichtung einen ersten optischen Wandler zum Umwandeln des ersten Multiträgersignals in ein erstes optisches Multiträgersignal auf einer ersten Trägerfrequenz, und einen zweiten optischen Wandler zum Umwandeln des zweiten Multiträgersignals in ein zweites optisches Multiträgersignal auf einer zweiten Trägerfrequenz. Die Trägerfrequenzen sind bevorzugt unterschiedlich, wobei die Umwandlung beispielsweise unter Verwendung einer Laserdiode durchgeführt werden kann.

Gemäß einer Ausführungsform ist die Netzwerkvorrichtung ausgebildet, ein Steuersignal auszusenden, das die Zuordnung der ersten Gruppe von Subträgern zu dem ersten Netzwerkteilnehmersignal und/oder die Zuordnung der zweiten Gruppe von Subträgern zu dem zweiten Netzwerkteilnehmersignal anzeigt. Auf diese Weise wird ein Empfänger über die gegenwärtige Subträgerzuordnung informiert, damit empfangsseitig das jeweilige Netzwerkteilnehmersignal demoduliert werden kann.

Gemäß einer Ausführungsform sind das erste Multiträgersignal und das zweite Multiträgersignal, beispielsweise im digitalen Bereich oder im optischen Bereich, orthogonal zueinander.

Gemäß einer Ausführungsform umfasst die erste Gruppe und/oder die zweite Gruppe von Subträgern eine Anzahl von Subträgern, die eine Frequenzbandbreite definiert, welche einer Frequenzbandbreite eines das erste Multiträgersignal oder das zweite Multiträgersignal empfangbaren elektrischen Filters eines Empfängers entspricht. Die Anzahl der Subträger definiert mit anderen Worten eine elektrische Bandbreite, welche dem jeweiligen Empfänger beispielsweise durch dessen elektrische Empfangsfilter zugeordnet ist.

Gemäß einem weiteren Aspekt betrifft die Erfindung eine Netzwerkvorrichtung, insbesondere eine Netzwerkvorrichtung, zum Empfangen eines Multiträgersignals, insbesondere eines optischen oder eines elektrischen Multiträgersignals, mit einem Empfangsfilter mit einer einstellbaren Empfangsfilterbandbreite, und einer Steuerungseinrichtung, welche ausgebildet ist, die einstellbare Bandbreite des Empfangsfilters ansprechend auf ein Steuersignal, das auf eine Bandbreite des Multiträgersignals hinweist, einzustellen. Das Empfangsfilter ist beispielsweise ein elektrisches Empfangsfilter.

Gemäß einer Ausführungsform ist die Steuerungseinrichtung ausgebildet, das Steuersignal beispielsweise über ein Kommunikationsnetzwerk von der vorstehend genannten Netzwerkeinrichtung zu empfangen.

Gemäß einer Ausführungsform ist das einstellbare Filter ein elektrisches und/oder ein optisches Antialias-Filter.

Gemäß einer Ausführungsform ist das Multiträgersignal ein optisches Multiträgersignal auf einer Trägerfrequenz, wobei die Netzwerkeinrichtung ferner eine verstimmbare Laserdiode zum Auswählen der Trägerfrequenz aufweist.

Gemäß einem weiteren Aspekt betrifft die Erfindung ein Verfahren zum Modulieren einer Mehrzahl von Netzwerkteilnehmersignalen, welche unterschiedlichen Netzwerkteilnehmern zugeordnet sind, gemäß dem OFDM-Modulationsschema, mit dem Schritt des Zuordnens einer ersten Gruppe von Subträgern zu einem ersten Netzwerkteilnehmersignal oder zu dem ersten Netzwerkteilnehmersignal und zu einem Abschnitt eines zweiten Netzwerkteilnehmersignals, und zum Zuordnen einer zweiten Gruppe von Subträgern zu dem zweiten Netzwerkteilnehmersignal oder zu einem ggf. verbleibenden Abschnitt des zweiten Netzwerkteilnehmersignals, und des Modulierens des ersten Netzwerkteilnehmersignals auf die erste Gruppe von Subträgern unter Verwendung der inversen Fourier-Transformation oder zum Modulieren des ersten Netzwerkteilnehmersignals und des Abschnitts des zweiten Netzwerkteilnehmersignals auf die erste Gruppe von Subträgern unter Verwendung der inversen Fourier-Transformation, um ein erstes Multiträgersignal zu erhalten, und zum Modulieren des zweiten Netzwerkteilnehmersignals oder eines Abschnitts des zweiten Netzwerkteilnehmersignals auf die zweite Gruppe von Subträgern unter Verwendung der inversen Fourier-Transformation, um ein zweites Multiträgersignal zu erhalten. Die beiden Gruppen von Subträgern werden bevorzugt separat moduliert, so dass das erste und das zweite Multiträgersignal separate Multiträgersignale sind. Das zweite Netzwerkteilnehmersignal kann somit separat oder teilweise zusammen mit dem ersten Netzwerkteilnehmersignal moduliert werden.

Die Erfindung betrifft ferner ein Verfahren zum Empfangen eines Multiträgersignals, mit den Schritten des Filterns des Multiträgersignals unter Verwendung eines Empfangsfilters mit einer einstellbaren Empfangsfilterbandbreite, und des Einstellens der Empfangsfilterbandbreite des Empfangsfilters ansprechend auf ein Steuersignal, das auf eine Bandbreite des Multiträgersignals hinweist.

Gemäß einem weiteren Aspekt betrifft die Erfindung ein Computerprogramm mit einem Programmcode zum Ausführen des jeweiligen erfindungsgemäßen Verfahrens, wenn das Computerprogramm auf einem Computer ausgeführt wird.

Weitere Ausführungsbeispiele werden Bezug nehmend auf die beiliegenden Zeichnungen erläutert. Es zeigen:

Fig. 1 ein Blockdiagramm eines optischen Übertragungssystems;

Fig. 2 ein Blockdiagramm der in Fig. 1 dargestellten Netzwerkvorrichtung in einer detaillierteren Darstellung;

Fig. 3 ein Blockdiagramm eines optischen Trägergenerators;

Fig. 4 ein Blockdiagramm eines optischen Trägergenerators;

Fig. 5 eine Übertragungsanordnung für die OBM-OFDM-Übertragung;

Fig. 6 eine Übertragungsanordnung für die OBM-OFDM-Übertragung; und

Fig. 7 eine Anordnung von Netzwerkvorrichtungen;

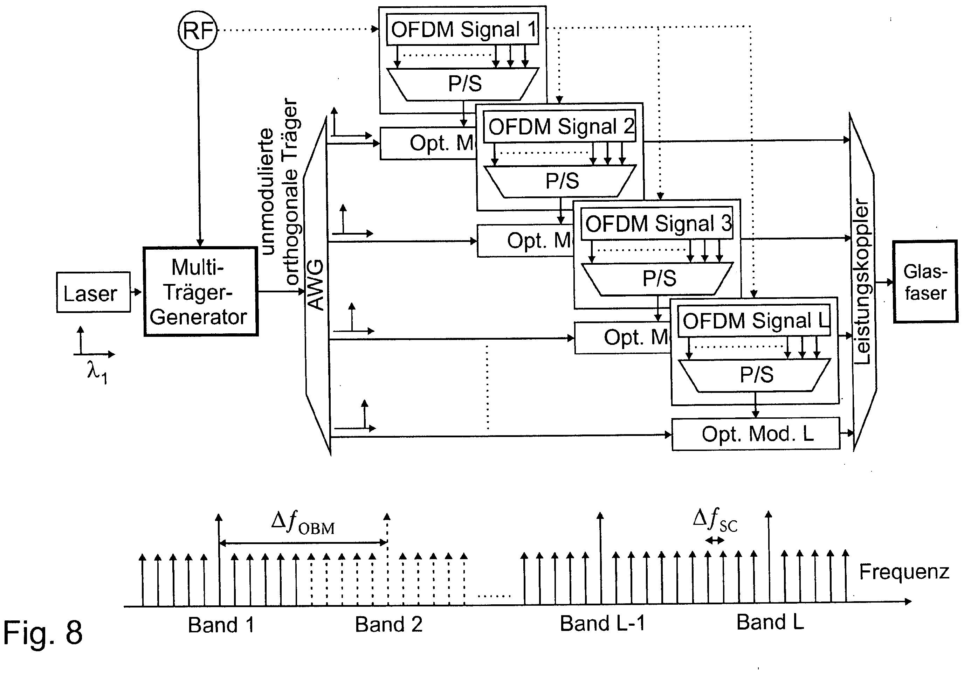

Fig. 8 eine Netzwerkvorrichtung; und

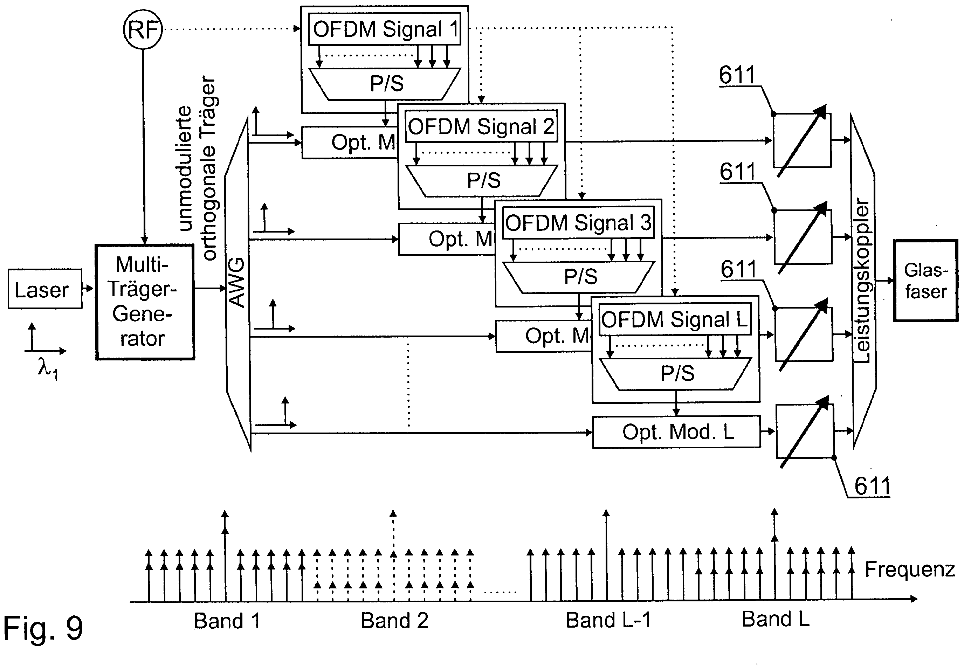

Fig. 9 eine Netzwerkvorrichtung; und

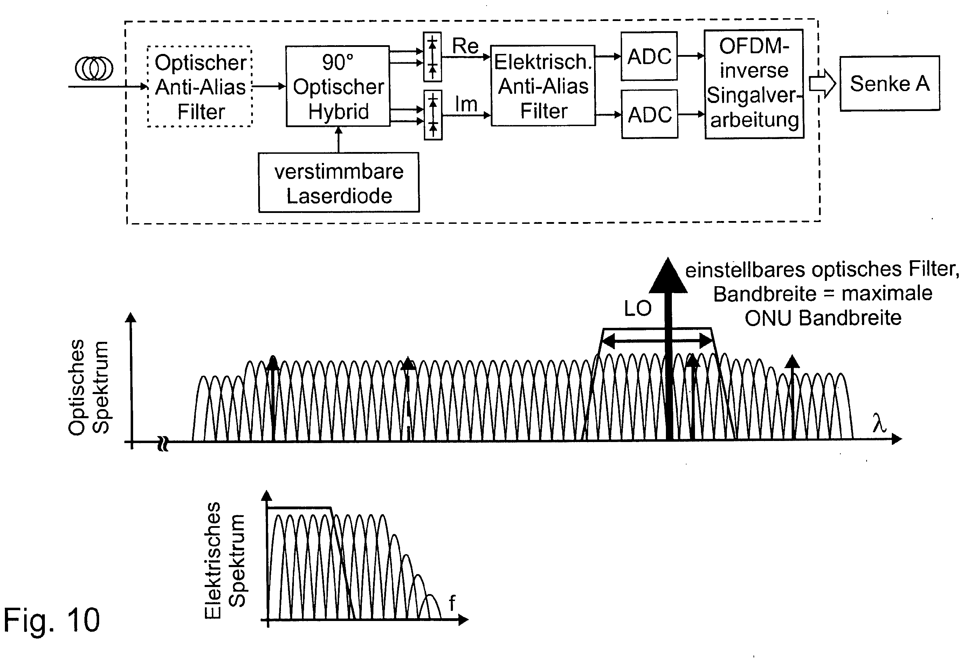

Fig. 10 eine Netwzerkvorrichtung.

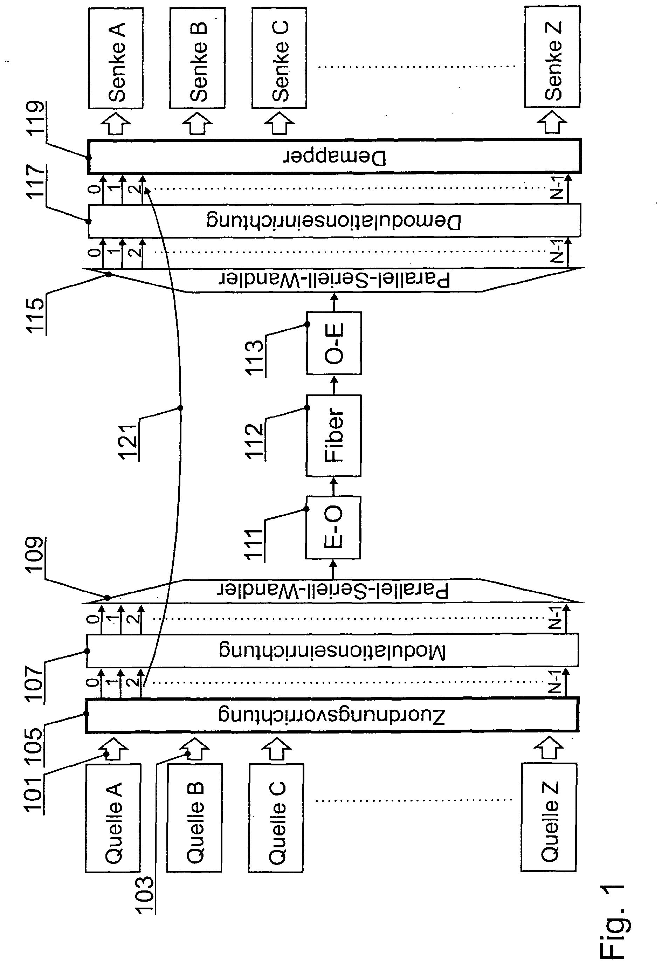

Fig. 1 zeigt ein Blockdiagramm eines optischen Übertragungssystems mit einer Netzwerkvorrichtung zum Modulieren einer Mehrzahl von Netzwerkteilnehmersignalen, welche unterschiedlichen Netzwerkteilnehmern A bis Z zugeordnet sind, gemäß dem OFDM-Modulationsschema. Die Netzwerkvorrichtung umfasst eine Zuordnungseinrichtung 105 zum Zuordnen einer ersten Gruppe von Subträgern zu einem ersten Netzwerkteilnehmersignal 101, und zum Zuordnen einer zweiten Gruppe von Subträgern zu einem zweiten Netzwerkteilnehmersignal 103. Durch die Zuordnung werden die jeweiligen Abtastwerte des jeweiligen Netzwerkteilnehmersignals jeweils einem Subträger zugeordnet.

Die Netzwerkvorrichtung umfasst ferner eine der Zuordnungseinrichtung 105 nachgeordnete Modulationseinrichtung 107 zum Modulieren des ersten Netzwerkteilnehmersignals auf die erste Gruppe von Subträgern unter Verwendung der inversen Fourier-Transformation, um ein erstes Multiträgersignal zu erhalten, und zum Modulieren des zweiten Netzwerkteilnehmersignals auf die zweite Gruppe von Subträgern, um ein zweites Multiträgersignal zu erhalten. Im Allgemeinen moduliert die Modulationseinrichtung eine Mehrzahl von Netzwerkteilnehmersignalen auf die diesen Signalen zugeordneten Subträger unter Verwendung der Fourier-Transformation, wobei die Ausgangssignale der Modulationseinrichtung 107 beispielsweise parallel ausgegeben werden.

Die Netzwerkvorrichtung umfasst ferner eine Sendeeinrichtung umfassend beispielsweise eine Parallel-zu-Seriell-Wandlereinrichtung 109, welche der Modulationseinrichtung 107 nachgeordnet und vorgesehen ist, die parallelen Abtastwerte der Mehrzahl der Multiträgersignale in einen seriellen Datenstrom zu überführen. Die Sendeeinrichtung umfasst ferner eine optische Wandlereinrichtung 111 zum Erzeugen eines optischen Signals beispielsweise aus dem ersten Multiträgersignal und dem zweiten Multiträgersignal, wodurch ein optisches Signal entsteht. Die optische Wandlereinrichtung kann beispielsweise das OBM-OFDM-Schema verwenden, um das gesamte zur Verfügung stehende WDM-Spektralfenster abzudecken.

Das resultierende optische Signal wird beispielsweise über eine Glasfaser 112 zu einer Netzwerkvorrichtung übertragen. Die Netzwerkvorrichtung umfasst eine optische Empfangseinheit mit einem optischen Wandler 113, welcher vorgesehen ist, das optische Empfangssignal in ein elektrisches Signal umzuwandeln. Der optischen Wandlereinrichtung ist eine Parallel-zu-Seriell-Wandlereinrichtung 115 nachgeordnet, welche die seriellen Abtastwerte in parallele Abtastwerte umwandelt, die einer Demodulationseinrichtung 117 zugeführt werden. Die Demodulationseinrichtung 117 ist vorgesehen, die parallelen Abtastwerte unter Verwendung der Fourier-Transformation in den Spektralbereich zu überführen, wobei die Demodulationsvorrichtung 117 beispielsweise auch eine Blocksynchronisation oder eine Filterung oder eine Entzerrung oder eine Entscheidung über die empfangenen Abtastwerte ausführen kann. Die Spektralwerte werden einem Demapper 119 zugeführt, welcher vorgesehen ist, die Mehrzahl der Netzwerkteilnehmersignale zu separieren und diese den Empfängern A bis Z zuzuleiten. Hierzu kann die Netzwerkvorrichtung beispielsweise ein Steuersignal 121 empfangen, welches beispielsweise die dem Netzwerkteilnehmer A zugeordnete Gruppe von Subträgern und somit die Bandbreite des dem Netzwerkteilnehmer A zugeordneten Multiträgersignals anzeigt. Unter Verwendung eines derartigen Steuersignals kann die Netzwerkvorrichtung, beispielsweise deren Demapper 119, insbesondere dann ein fehlerfreies Demapping durchführen, wenn die Zuordnung der Subträger zu dem jeweiligen Multiträgersignal dynamisch bzw. adaptiv ist.

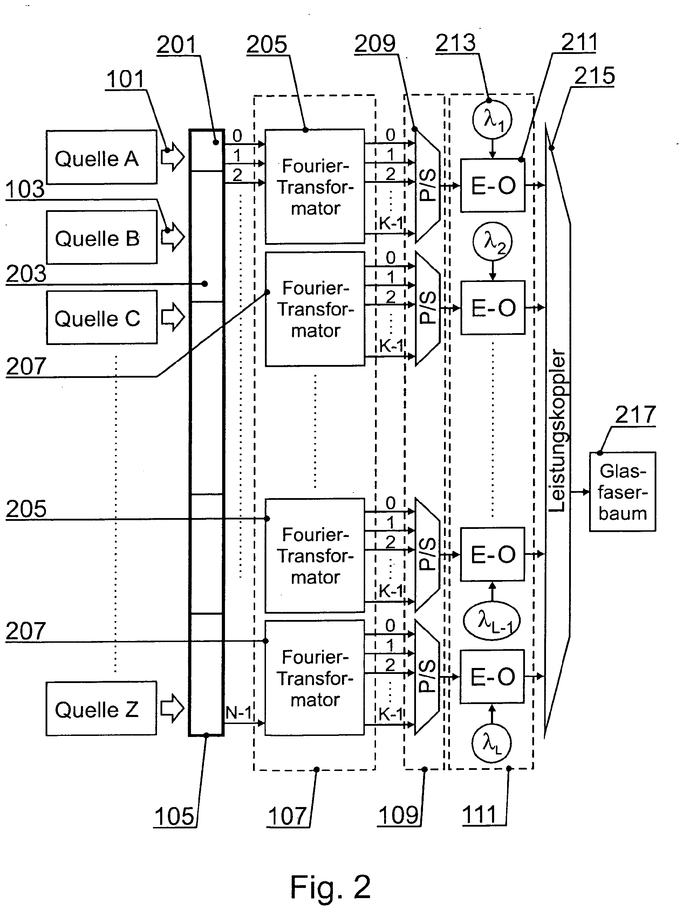

Fig. 2 zeigt ein Blockdiagramm der in Fig. 1 dargestellten Netzwerkvorrichtung in einer detaillierteren Darstellung. Wie in Fig. 2 angedeutet, kann die Zuordnungseinrichtung 105 den Netzwerkteilnehmersignalen, beispielsweise den Signalen 101 und 103, jeweils unterschiedlich breite Gruppen 201 bzw. 203 mit jeweils einer unterschiedlichen Anzahl von Subträgern zuordnen. Dadurch wird erreicht, dass die Kapazität sozusagen "atmend" ausgeführt wird, so dass unterschiedliche Netzwerkteilnehmersignale bzw. -daten den Subbändern flexibel zugeordnet und gemultiplext werden können. Die Festlegung der jeweiligen Anzahl der Subträger kann beispielsweise dynamisch-adaptiv erfolgen. Die Modulationseinrichtung 107 kann beispielsweise zur Modulation der Mehrzahl der den jeweiligen Subträgern zugeordneten Multiträgersignale eine Mehrzahl von eigenständigen Fourier-Transformatorn aufweisen. So ist beispielsweise dem ersten Netzwerkteilnehmersignal ein erster Fourier-Transformator 205 und dem zweiten Netzwerkteilnehmer ein zweiter Fourier-Transformator 207 zugeordnet. Die Fourier-Transformatoren 205 und 207 transformieren die jeweiligen den Subträgern zugeordneten Signale, nach einem Subträger-Mapping, mittels der inversen Fourier-Transformation in separate Multiträgersignale, welchen jeweils beispielsweise ein Parallel-zu-Seriell-Wandler 209 der Wandlungseinrichtung 109 zugeordnet ist. Die Multiträgersignale werden separat parallel-zu-seriell gewandelt und der optischen Wandlungseinrichtung 111 zugeführt. Diese umfasst für jedes der Multiträgersignale beispielsweise einen elektrooptischen Wandler 211, wobei die Wandler jeweils mit beispielsweise einem Laser 213 angesteuert werden, um die Trägersignale auf unterschiedliche optische Bänder umzusetzen. Die Laser 213 weisen bevorzugt unterschiedliche Laserwellenlängen auf, um eine spektrale Trennung der Bänder zu bewirken. Bevorzugt sind die Laser derart aufeinander abgestimmt, sodass eine spektrale Kontinuität gewährleistet ist. Die elektrooptischen Wandler 211 weisen beispielsweise elektrisch ansteuerbare Laserdioden auf, welche optische Signale erzeugen, die mittels eines der Wandlungseinrichtung 111 nachgeschalteten Leistungskopplers 215 zusammengekoppelt und beispielsweise einem Glasfaserbaum 217 zur Übertragung zugeleitet werden. Durch die separate Umsetzung der jeweiligen Multiträgersignale mittels der elektrooptischen Wandler 211 wird insbesondere für einen engen optischen Abstand eine Bandorthogonalität erreicht, welche vorteilhaft die anschließende Signaldetektion ist.

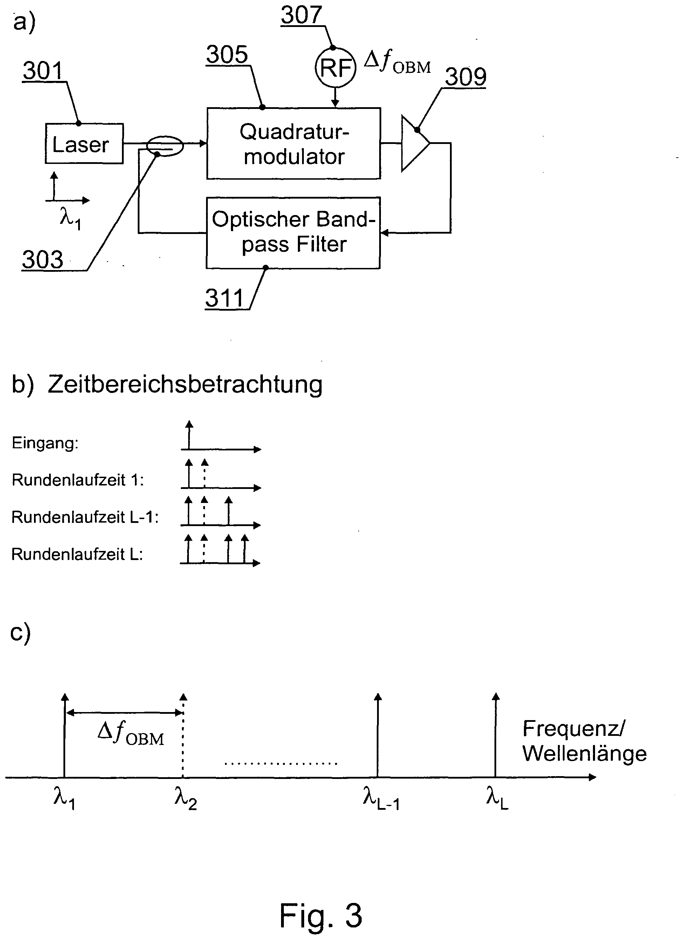

Fig. 3 zeigt ein beispielhaftes Blockdiagramm eines optischen Trägergenerators aus Fig. 2, welcher die Funktion eines RFS (RFS: Recirculating Frequency Shifter) übernimmt. Der Trägergenerator umfasst einen Laser 301, welcher mittels einer Wellenlänge $\lambda_1$ angesteuert wird, wobei ein Ausgangssignal des Lasers einem Koppler 303 zugeführt wird. Ein Ausgangssignal des Kopplers 303 wird einem optischen Quadraturmodulator zugeleitet, welches mittels eines Synthesizers 307 mit Hochfrequenzleistung angesteuert wird. Dem optischen Quadraturmodulator 305 ist ein Verstärker 309 nachgeschaltet, dessen Ausgang über ein optisches Bandpassfilter 311 zurückgeführt und dem Koppler 303 zugeleitet wird. Dadurch entstehen unmodulierte, orthogonale WDM-Träger, wobei ein Signalzu-Rausch-Verhältnis größer als 20 dB betragen kann.

In Fig. 3B ist eine zeitliche Betrachtung der Rundenlaufzeiten (Round Trip Times) 1 bis L der Eingangssignale dargestellt.

In Fig. 3C ist der Wellenlängenabstand der Wellenlängen, welche den jeweiligen Laser 301 des jeweiligen optischen Wandlers 211 ansteuern, dargestellt. Dabei können die Pilotunterträger in dem gesamten Verstärkerübertragungsfenster angeordnet sein. Auf diese Weise wird eine gemeinsame Orthogonalität der WDM-Subträger über die gesamte Bandbreite erreicht, so dass beliebige zwei OFDM-Subträger auch dann orthogonal sind, wenn sie von unterschiedlichen WDM-Subträgern stammen.

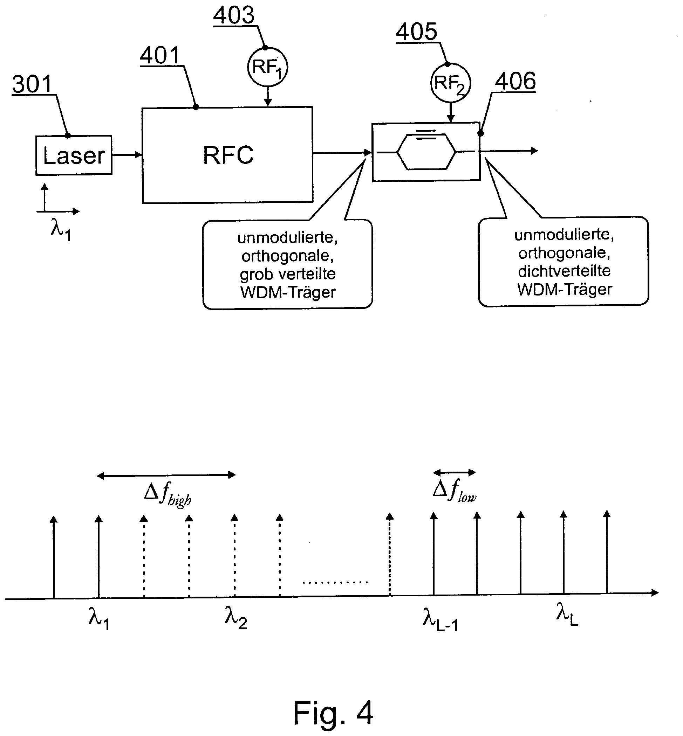

Fig. 4 zeigt ein beispielhaftes Blockdiagramm eines weiteren optischen Trägergenerators, welcher in der in Fig. 2 dargestellten Anordnung verwendet werden kann. Der in Fig. 4 dargestellte Trägergenerator erzeugt orthogonale WDM-Subträger in zwei Schritten. Im Unterschied zu der in Fig. 3 dargestellten Anordnung wird eine zweistufige Trägererzeugung gewählt: Der Trägergenerator umfasst einen RFC 401, welches mittels eines Synthesizers 403 bei beispielsweise 200 GHz angesteuert wird. Ein Ausgang des RFS wird einem Mach-Zehnder-Modulator 405 zugeführt, welcher mittels eines weiteren Synthesizers 405 bei beispielsweise 20 GHz hochspannungsmäßig angesteuert wird. Dadurch wird der Mach-Zehnder-Modulator 406 in Sättigung gebracht, so dass die dadurch resultierende Nichtlinearität Harmonische höherer Ordnung, beispielsweise bis zu sieben Obertönen, generieren kann. Dadurch wird die Anordnung der orthogonalen WDM-Träger verdichtet, wie es in dem in Fig. 4 dargestellten, unteren Wellenlängendiagramm verdeutlicht ist.

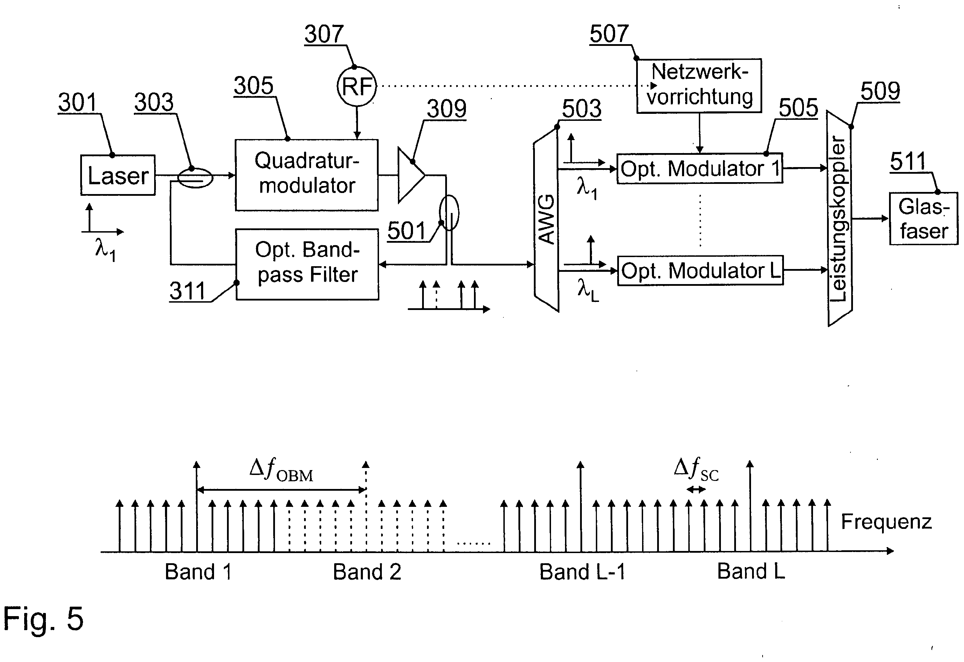

Fig. 5 zeigt eine Übertragungsanordnung für die OBM-OFDM-Übertragung, bei der beispielsweise der in Fig. 3 dargestellte elektrooptische Wandler eingesetzt wird. Ferner ist ein weiterer Koppler 501 vorgesehen, um unmodulierte, orthogonale Subträger auszukoppeln. Die optischen Unterträger werden einem Arrayed Waveguide Grating-(AWG)-Element 503 zugeführt, dessen L-Ausgänge zur Ansteuerung von L-Modulatoren 505 eingesetzt werden. Die optischen Modulatoren werden ferner von den Multiträgersignalen einer in Fig. 5 teilweise dargestellten Netzwerkvorrichtung 507 angesteuert. Die resultierenden optischen Signale werden einem Leistungskoppler 509 zugeführt, dessen Ausgang mit einer Glasfaser verbunden ist.

Im unteren der Diagramm in Fig. 5 ist ferner die Frequenzverteilung über die Bänder 1 bis L dargestellt, wobei das OBM-OFDM-Spektrum das gesamte Übertragungsfenster abdecken kann. Um eine Schutzintervall-freie Übertragung zu gewährleisten, kann beispielsweise die folgende Orthogonalitätsbedingung gewählt werden:

$$m \ast \Delta f_{SC} = \Delta f_{OBM}.$$

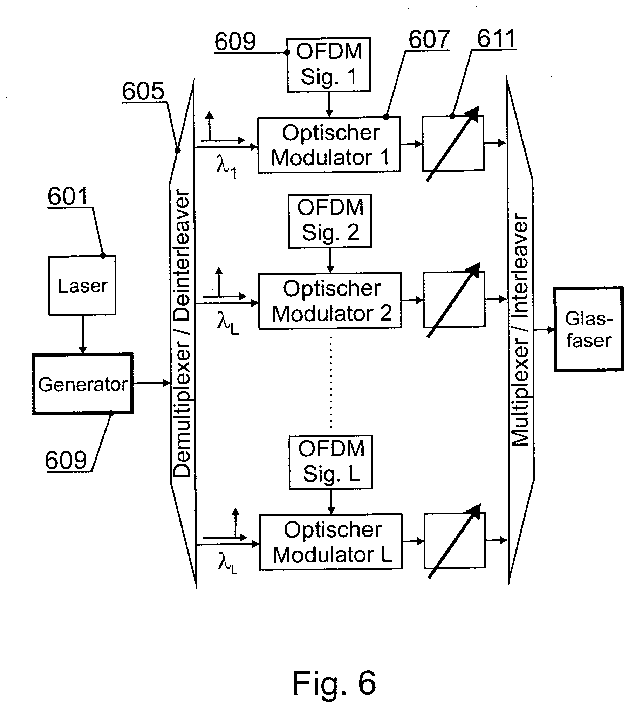

Fig. 6 zeigt eine Anordnung zur OBM-OFDM-Übertragung unter Verwendung einer Subträgerleistungsskalierung. Die Anordnung umfasst einen Laser 601, beispielsweise einen einzigen Laser, dessen Ausgang einem Generator 603 zur Erzeugung orthogonaler Subträger zugeführt wird. Ein Ausgang des Generators 603 wird einem Demultiplexer/Deinterleaver 605 zugeführt, welcher die im Trägergenerator erzeugten optischen Wellenlängen, beispielsweise L Wellenlängen, frequenzselektiv auf die einzelnen Ausgänge aufspaltet. Die Wellenlängen, d.h. die optischen Träger, welche die jeweilige optische Wellenlänge aufweisen, werden jeweils einem optischen Modulator 607 zugeführt, wobei die optischen Modulatoren jeweils durch Multiträgersignale eines jeweiligen OFDM-Modulators 609, wie es beispielsweise in Fig. 2 dargestellt ist, angesteuert werden. Die Ausgänge der optischen Modulatoren 607 werden jeweils Skalierungselementen 611 zugeführt, welche eine Leistungsskalierung der Ausgangssignale der optischen Modulatoren 607 vornehmen. Die Skalierungselemente 611 können beispielsweise als optische Halbleiterverstärker (SOA: Semiconductor Optical Amplifier), deren Verstärkung einstellbar sein kann, ausgeführt sein. Die Skalierungselemente 611 werden eingesetzt, um der Möglichkeit Rechnung zu tragen, dass die Zuordnung der OFDM-Subträger zu einem bestimmten Empfänger nicht vorbestimmt, sondern veränderlich sein kann, was eine Leistungsskalierung der Signalpfade vorteilhaft machen kann. Die Subträger-spezifische Verstärkersteuerung kann beispielsweise durch einen senderseitigen spektralen Leistungsüberwachungsschaltkreis oder durch einen Rückkopplungskanal von einem Empfänger realisiert werden.

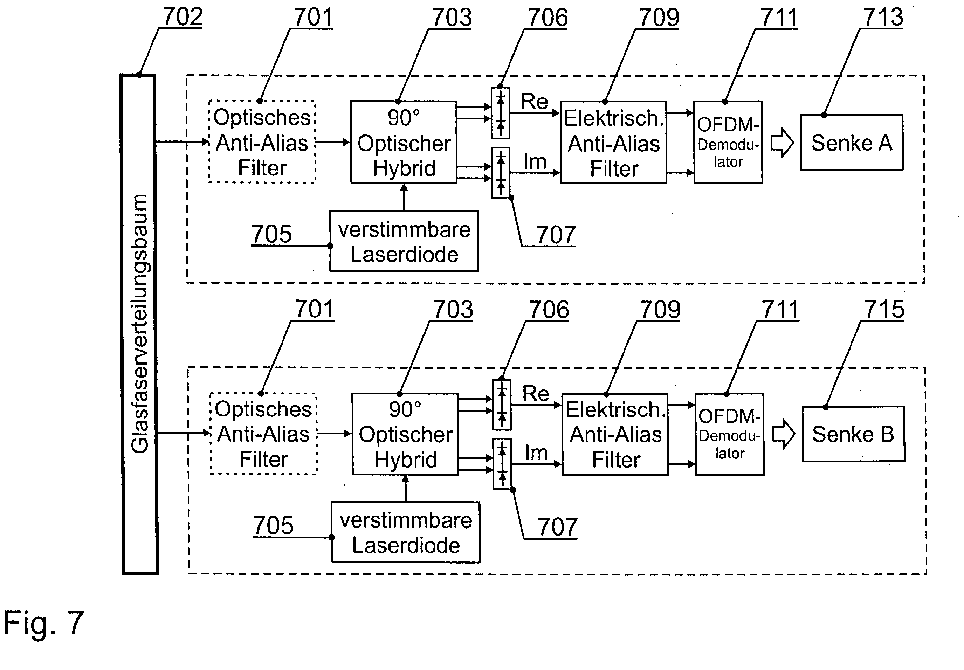

Fig. 7 zeigt eine Anordnung von Netzwerkvorrichtungen A und B, welche beispielsweise als ONUs ausgeführt werden können (ONU: Optical Network Unit). Jede der ONUs A bzw. B umfasst empfangsseitig ein optisches Antialias-Filter 701, das optional ist. Dem optischen Antialias-Filter 701 werden optische Signale zugeführt, welche über einen Glasfaserverteilungsbaum 702 übertragen werden. Der Glasfaserverteilungsbaum 702 ist ein Bestandteil des optischen Übertragungsweges. Die Ausgänge der optischen Antialias-Filter 701 werden jeweils einem 90°-optischen Hybrid 703 zugeführt, in welcher jeweils unter Verwendung einer verstimmbaren Laserdiode 705 die Inphase- und Quadraturkomponenten des möglicherweise gefilterten optischen Signals erzeugt werden. Die Ausgänge der optischen Hybride 703 werden jeweils optischen Wandlern 706 und 707 zugeführt, welche die Realteile (Re) und die Imaginärteile (Im) getrennt in elektrische Signale wandeln, welche dann jeweils einem elektrischen Antialias-Filter 709 zugeführt werden. Die gefilterten Ausgangssignale der elektrischen Antialias-Filter 709 werden jeweils einem OFDM-Demodulator 711 zugeführt, wobei die OFDM-Demodulatoren 711 einen OFDM-inversen Signalverarbeitungsprozess durchführen und beispielsweise vorgesehen sind, um die gefilterten Signale einer Fourier-Transformation zu unterziehen.

Die demodulierten Signale werden dann den Netzwerkteilnehmern 713 bzw. 715 zugeleitet.

Durch eine Verstimmung der Laserdiode können so genannte Alias-Wellenlängen effizient unterdrückt werden. Das jeweilige elektrische Antialias-Filter 709 kann beispielsweise analog oder digital oder analog und digital ausgeführt werden, und eine Bandbreite aufweisen, welche beispielsweise etwas größer als die Kanalbandbreitenanforderungen der zu verarbeitenden OFDM-Subträger bis zur ultimativ notwendigen unteren Schwelle sein.

Es ist anzumerken, dass in den in Figuren 1 bis 7 dargestellten Ausführungsbeispielen der optionale Polarisationsdivisionsmultiplex (PDM) nicht dargestellt ist. Diese Option ermöglicht eine Verdopplung der gesamten Kanalkapazität. In diesem bekannten Fall kommen sogenannte MIMO-Processing Verfahren im Empfänger zum Einsatz. Das erfindungsgemäß eingesetzte ÖBM-OFDM-Konzept als Modulations- und Multiplex-Schema ermöglicht eine bandbreitenskalierbare und spektraleffiziente Übertragung optischer Signale sowie einen Zugriff auf Subwellenlängenbandbreiten, wenn die volle Bandbreitenkapazität nicht benötigt ist. Hierzu wird das OBM-OFDM-Spektrum in mehrere orthogonale Bänder aufgeteilt, wobei durch die Inter-BandOrthogonalität nur geringe oder auch keine Schutzbänder ohne Inter-Band-Interferenz möglich sind. Bevorzugt wird das OBM-OFDM-Schema sowohl im optischen als auch im elektrischen Bereich implementiert, wobei digitalzu-analog-Konverter und analog-zu-digital-Konverter, zusammen mit elektrischen Antialias-Filtern eingesetzt werden, so dass das Problem der im Vergleich zur optischen Bandbreite geringeren elektrischen Bandbreite gelöst wird. Durch die flexible Zuordnung der Subträger zu dem jeweiligen Netzwerkteilnehmer kann auf der Basis des OBM-OFDM-A-Schemas (A: Access) eine hohe Flexibilität erreicht werden, weil dem jeweiligen Netzwerkteilnehmer so viel Übertragungskapazität wie benötigt zugewiesen werden kann. Das OBM-OFDM-A-Schema ist ferner unanfällig gegenüber einer nebengeordneten Zeitausrichtung, wobei Datenraten bis zu 107 Gb/s mit einer hohen spektralen Effizienz bis zu 3,3 b/s/Hz, beispielsweise unter Verwendung von 4-QAM (QAM: Quaternary Amplitude Modulation) erreicht werden können.

Bevorzugt sind die Empfänger kohärente optische Empfänger, welche eine Downstream-Kapazität von einigen Tb/s ermöglichen. Die Upstream-Kapazität beträgt beispielsweise 10 Gb/s, wobei eine hohe Flexibilität und Adaptivität von einigen wenigen Mb/s bis zu einigen Gb/s zwischen zwei Knoten einfach skalierbar möglich sind.

So wird insbesondere in der Downstream-Übertragungsrichtung die Hürde für einen Einsatz optischer OFDM bzw. OFDM-A-Systeme beseitigt, indem beispielsweise OBM-OFDM-A für den Downstream eingesetzt wird. Wie vorstehend ausgeführt, wird dabei die Zuordnung der OFDM-Subträger flexibel gehalten, wobei vorteilhafterweise eine Demodulation mit einem kohärenten Empfänger erfolgt. Dadurch werden adaptive Datenraten und flexible Adressierungen ermöglicht, wobei die zu verarbeitenden Daten- bzw. Signalblöcke durch die erfindungsgemäße Gruppenaufteilung gering sind.

Gemäß einer Ausführungsform kann ein Medium Access Control (MAC) Protokol für die OFDM-Subträger vorgesehen werden, damit die einer einzelnen logischen Punkt-zu-Punkt Kommunikation zugeordneten Subträger im Spektrum weitgehend zusammenhängend sind. Vorteilhaft können sie empfängerseitig einer gemeinsamen elektrischen Signalverarbeitung unterworfen werden. Es kann hierbei durchaus sein, dass geringe spektrale Verschränkungen im Betrieb auftreten. In diesem Fall kann das jeweilige OFDM-Empfangsmodul die nicht relevanten Daten verwerfen und nur die für es bestimmten Daten für die weitere Verwendung an die Datensinke weiterleiten. Hintergrund für spektrale Verschränkungen im Betrieb sind die Dynamik der Verkehrsbeziehungen, die daraus bestehen, dass einzelnen Verkehre gelegentlich neu auf- bzw. nach einer gewissen Haltezeit wieder abgebaut werden. Wenn hierbei die erforderliche Bandbreite der Verkehre variable sein darf, entstehen spektrale Lücken, die immer genau den neuen Verkehren entsprechen. Eine weitere Maßnahme, um Lücken zu entgegnen, ist die Verschiebung bestehender spektral benachbarter Verkehre in die Lücken und die damit verbundene gezielte Verstimmung der Lokallaser.

## Patentansprüche

1. Netzwerkvorrichtung zum Modulieren einer Mehrzahl von Netzwerkteilnehmersignalen, welche unterschiedlichen Netzwerkteilnehmern zugeordnet sind, gemäß dem OFDM, Orthogonal Frequency Division Multiplexing, orthogonaler Frequenzmultiplex - Modulationsschema, mit folgenden Merkmalen:

   einer Zuordnungseinrichtung (105)
   zum Zuordnen einer ersten Gruppe von Subträgern zu einem ersten Netzwerkteilnehmersignal (101) und zum Zuordnen einer zweiten Gruppe von Subträgern zu einem zweiten Netzwerkteilnehmersignal (103)
   oder
   zum Zuordnen der ersten Gruppe von Subträgern zu dem ersten Netzwerkteilnehmersignal (101) und zu einem ersten Abschnitt des zweiten Netzwerkteilnehmersignals (103) und zum Zuordnen der zweiten Gruppe von Subträgern zu einem zweiten Abschnitt des zweiten Netzwerkteilnehmersignals (103);
   einer Modulationseinrichtung (107)
   zum Modulieren des ersten Netzwerkteilnehmersignals (101) auf die erste Gruppe von Subträgern unter Verwendung der inversen Fourier-Transformation, um ein erstes Multiträgersignal zu erhalten, und zum Modulieren des zweiten Netzwerkteilnehmersignals (103) auf die zweite Gruppe von Subträgern unter Verwendung der inversen Fourier-Transformation, um ein zweites Multiträgersignal zu erhalten,

oder

zum Modulieren des ersten Netzwerkteilnehmersignals (101) und des ersten Abschnitts des zweiten Netzwerkteilnehmersignals (103) auf die erste Gruppe von Subträgern unter Verwendung der inversen Fourier-Transformation, um ein erstes Multiträgersignal zu erhalten, und zum Modulieren des zweiten Abschnitts des zweiten Netzwerkteilnehmersignals (103) auf die zweite Gruppe von Subträgern unter Verwendung der inversen Fourier-Transformation, um ein zweites Multiträgersignal zu erhalten, wobei

die Zuordnungseinrichtung (105) ausgebildet ist, eine Anzahl von dem ersten Netzwerkteilnehmersignal (101) zugeordneten Subträgern dem zweiten Netzwerkteilnehmersignal (103) zuzuordnen, falls zum Modulieren des zweiten Netzwerkteilnehmersignals (103) eine erhöhte Anzahl von Subträgern notwendig ist, und/oder falls zum Modulieren des ersten Netzwerkteilnehmersignals (101) eine verringerte Anzahl von Subträgern ausreichend ist, und wobei die Netzwerkeinrichtung ausgebildet ist, die Mehrzahl der Netzwerkteilnehmersignale (101, 103) gemäß dem OBM-OFDM, Orthogonal Band Multiplexed OFDM, -Schema zu modulieren, und wobei die Netzwerkvorrichtung ferner ausgebildet ist, ein Steuersignal auszusenden, das die Zuordnung der ersten Gruppe von Subträgern zu dem ersten Netzwerkteilnehmersignal (101) und/oder die Zuordnung der zweiten Gruppe von Subträgern zu dem zweiten Netzwerkteilnehmersignal (103) anzeigt;

einer optischen Sendeeinrichtung (109, 111) zum Erzeugen eines optischen Signals aus dem ersten Multiträgersignal und/oder dem zweiten Multiträgersignal, wobei die optische Sendeeinrichtung (109, 111) einen ersten optischen Wandler (211) zum Umwandeln des ersten Multiträgersignals in ein erstes optisches Multiträgersignal auf einer ersten Trägerfrequenz, und einen zweiten optischen Wandler (211) zum Umwandeln des zweiten Multiträgersignals in ein zweites optisches Multiträgersignal auf einer zweiten Trägerfrequenz, umfasst.

2. Netzwerkvorrichtung gemäß Anspruch 1, wobei die erste Gruppe von Subträgern und die zweite Gruppe von Subträgern jeweils aufeinanderfolgende Subträger aufweisen.

3. Netzwerkvorrichtung gemäß einem der vorstehenden Ansprüche, wobei die Modulationseinrichtung (105) einen ersten OFDM-Modulator (205) zum Modulieren des ersten Netzwerkteilnehmersignals (101) und einen zweiten OFDM-Modulator (207) zum Modulieren des zweiten Netzwerkteilnehmersignals (103) aufweist.

4. Netzwerkvorrichtung gemäß einem der vorstehenden Ansprüche, wobei die Zuordnungseinrichtung (105) ausgebildet ist, eine Anzahl von Subträgern der ersten Gruppe von Subträgern und/oder eine Anzahl von Subträgern der zweiten Gruppe von Subträgern innerhalb einer vorgegebenen Gesamtanzahl von Subträgern zu bestimmen.

5. Netzwerkvorrichtung gemäß einem der vorstehenden Ansprüche, wobei die erste Gruppe und/oder die zweite Gruppe von Subträgern eine Anzahl von Subträgen aufweist, die eine Frequenzbandbreite definiert, welche einer Frequenzbandbreite eines das erste Multiträgersignal empfangbaren elektrischen Empfangsfilters entspricht.

6. Netzwerkvorrichtung, insbesondere eine Netzwerkeinrichtung, zum Empfangen eines mittels einer Netzwerkvorrichtung gemäß einem der Ansprüche 1 bis 5 gemäß dem OBM-OFDM-Schema modulierten Multiträgersignals, mit:

einem Empfangsfilter mit einer einstellbaren Empfangsfilterbandbreite; und einer Steuerungseinrichtung, welche ausgebildet ist, die Empfangsfilterbandbreite des Empfangsfilters ansprechend auf ein Steuersignal, das auf eine Bandbreite des Multiträgersignals hinweist, einzustellen.

7. Netzwerkvorrichtung gemäß Anspruch 6, wobei die Steuerungseinrichtung ausgebildet ist, das Steuersignal zu empfangen.

8. Netzwerkvorrichtung gemäß Anspruch 6 oder 7, wobei das einstellbare Filter ein Antialias-Filter ist.

9. Netzwerkvorrichtung gemäß Anspruch 6, 7 oder 8, wobei das Multiträgersignal ein optisches Multiträgersignal auf einer Trägerfrequenz ist, und wobei Netzwerkvorrichtung ferner eine verstimmbare Diode zum Auswählen der Trägerfrequenz aufweist.

10. Verfahren zum Modulieren einer Mehrzahl von Netzwerkteilnehmersignalen, welche unterschiedlichen Netzwerkteilnehmern zugeordnet sind, gemäß dem OBM, Orthogonal Band Multiplexed, -OFDM, Orthogonal Frequency Division Multiplexing, orthogonaler Frequenzmultiplex, -Modulationsschema, mit folgenden Merkmalen:

Zuordnen einer ersten Gruppe von Subträgern zu einem ersten Netzwerkteilnehmersignal (101), Zuordnen einer zweiten Gruppe von Subträgern zu einem zweiten Netzwerkteilnehmersignal (103),

Modulieren des ersten Netzwerkteilnehmersignals (101) auf die erste Gruppe von Subträgern unter Verwendung der inversen Fourier-Transformation, um ein erstes Multiträgersignal zu erhalten, und

Modulieren des zweiten Netzwerkteilnehmersignals (103) auf die zweite Gruppe von Subträgern unter Verwendung der inversen Fourier-Transformation, um ein zweites Multiträgersignal zu erhalten,

oder

Zuordnen der ersten Gruppe von Subträgern zu dem ersten Netzwerkteilnehmersignal (101) und zu einem ersten Abschnitt des zweiten Netzwerkteilnehmersignals (103), Zuordnen einer zweiten Gruppe von Subträgern zu einem zweiten Abschnitt des zweiten Netzwerkteilnehmersignals (103),

Modulieren des ersten Netzwerkteilnehmersignals (101) und des ersten Abschnitts des zweiten Netzwerkteilnehmersignals (103) auf die erste Gruppe von Subträgern unter Verwendung der inversen Fourier-Transformation, um ein erstes Multiträgersignal zu erhalten, und Modulieren des zweiten Abschnitts des zweiten Netzwerkteilnehmersignals (103) auf die zweite Gruppe von Subträgern unter Verwendung der inversen Fourier-Transformation, um ein zweites Multiträgersignal zu erhalten, wobei

eine Anzahl von dem ersten Netzwerkteilnehmersignal (101) zugeordneten Subträgern dem zweiten Netzwerkteilnehmersignal (103) zugeordnet werden, falls zum Modulieren des zweiten Netzwerkteilnehmersignals (103) eine erhöhte Anzahl von Subträgern notwendig ist, und/oder falls zum Modulieren des ersten Netzwerkteilnehmersignals (101) eine verringerte Anzahl von Subträgern ausreichend ist,

Aussenden eines Steuersignals, das die Zuordnung der ersten Gruppe von Subträgern zu dem ersten Netzwerkteilnehmersignal und/oder die Zuordnung der zweiten Gruppe von Subträgern zu dem zweiten Netzwerkteilnehmersignal anzeigt und Erzeugen eines optischen Signals aus dem ersten Multiträgersignal und/oder dem zweiten Multiträgersignal mit einer optischen Sendeeinrichtung (109, 111), wobei die optische Sendeeinrichtung (109, 111) einen ersten optischen Wandler (211) zum Umwandeln des ersten Multiträgersignals in ein erstes optisches Multiträgersignal auf einer ersten Trägerfrequenz, und einen zweiten optischen Wandler (211) zum Umwandeln des zweiten Multiträgersignals in ein zweites optisches Multiträgersignal auf einer zweiten Trägerfrequenz, umfasst.

11. Verfahren zum Empfangen eines nach dem Verfahren gemäß Anspruch 10 gemäß dem OBM-OFDM-Schema modulierten Multiträgersignals, mit:

Filtern des Multiträgersignals unter Verwendung eines Empfangsfilter mit einer einstellbaren Empfangsfilterbandbreite; und Einstellen einer Bandbreite des Empfangsfilters ansprechend auf ein Steuersignal, das auf eine Bandbreite des Multiträgersignals hinweist.

12. Computerprogramm mit einem Programmcode zum Ausführen des Verfahrens gemäß Anspruch 10 oder 11, wenn das Computerprogramm auf einem Computer ausgeführt wird.

## Claims

1. A network device for modulating a plurality of network subscriber signals associated with different network subscribers, in accordance with the OFDM, Orthogonal Frequency Division Multiplexing, modulation scheme, comprising the following features:

an allocation device (105)
for allocating a first group of subcarriers to a first network subscriber signal (101) and for allocating a second group of subcarriers to a second network subscriber signal (103); or
for allocating the first group of subcarriers to the first network subscriber signal (101) and to a first portion of the second network subscriber signal (103) and
for allocating the second group of subcarriers to a second portion of the second network subscriber signal (103);
a modulation device (107)
for modulating the first network subscriber signal (101) onto the first group of subcarriers using inverse Fourier transform to obtain a first multicarrier signal, and for modulating the second network subscriber signal (103) onto the second group of subcarriers using inverse Fourier transform to obtain a second multi-carrier signal; or
for modulating the first network subscriber signal (101) and the first portion of the second network subscriber signal (103) onto the first group of subcarriers using inverse Fourier transform to obtain a first multi-carrier signal, and for modulating the second portion of the second network subscriber signal (103) onto the second group of subcarriers using inverse Fourier transform to obtain a second multi-carrier signal; wherein the allocation device (105) is adapted to allocate a number of sub-carriers allocated to the first network subscriber signal (101) to the second network subscriber signal (103) if an increased number of subcarriers is necessary to modulate the second network subscriber signal (103) and/or if a reduced number of subcarriers is sufficient to modulate the first network subscriber signal (101); and wherein

the network device is adapted to modulate the plurality of network subscriber signals (101, 103) according to the OBM OFDM, Orthogonal Band Multiplexed OFDM, scheme, and wherein the network device is further adapted to transmit a control signal indicating the allocation of the first group of subcarriers to the first network subscriber signal (101) and/or the allocation of the second group of subcarriers to the second network subscriber signal (103);

an optical transmitter device (109, 111) for generating an optical signal from the first multi-carrier signal and/or the second multi-carrier signal, wherein the optical transmitter device (109, 111) comprises a first optical converter (211) for converting the first multi-carrier signal into a first optical multi-carrier signal at a first carrier frequency, and a second optical converter (211) for converting the second multi-carrier signal into a second optical multi-carrier signal at a second carrier frequency.

2. The network device according to claim 1, wherein the first group of subcarriers and the second group of subcarriers each comprise successive subcarriers.

3. The network device according to any one of the preceding claims, wherein the modulation device (105) comprises a first OFDM modulator (205) for modulating the first network subscriber signal (101) and a second OFDM modulator (207) for modulating the second network subscriber signal (103).

4. The network device according to any one of the preceding claims, wherein the allocation device (105) is adapted to determine a number of subcarriers of the first group of subcarriers and/or a number of subcarriers of the second group of subcarriers among a predetermined total number of subcarriers.

5. The network device according to any one of the preceding claims, wherein the first group and/or the second group of subcarriers comprises a number of subcarriers defining a frequency bandwidth that corresponds to a frequency bandwidth of an electrical reception filter able to receive the first multi-carrier signal.

6. A network device, in particular a network device for receiving a multi-carrier signal modulated by a network device according to any one of claims 1 to 5 according to the OBM OFDM scheme, comprising:

a reception filter with an adjustable reception filter bandwidth; and
a controller adapted to adjust the reception filter bandwidth of the reception filter in response to a control signal indicating a bandwidth of the multi-carrier signal.

7. The network device according to claim 6, wherein the control device is adapted to receive the control signal.

8. The network device according to claim 6 or 7, wherein the adjustable filter is an antialiasing filter.

9. The network device according to claim 6, 7 or 8, wherein the multi-carrier signal is an optical multi-carrier signal at a carrier frequency; and wherein the network device further comprises a tuneable diode for selecting the carrier frequency.

10. A method of modulating a plurality of network subscriber signals associated with different network subscribers, according to the OBM OFDM, Orthogonal Band Multiplexed Orthogonal Frequency Division Multiplexing, modulation scheme, comprising the following features

allocating a first group of sub-carriers to a first network subscriber signal (101);
allocating a second group of subcarriers to a second network subscriber signal (103);
modulating the first network subscriber signal (101) onto the first group of subcarriers using inverse Fourier transform to obtain a first multi-carrier signal; and
modulating the second network subscriber signal (103) onto the second group of subcarriers using inverse Fourier transform to obtain a second multi-carrier signal;
or
allocating the first group of subcarriers to the first network subscriber signal (101) and to a first portion of the second network subscriber signal (103);
allocating a second group of subcarriers to a second portion of the second network subscriber signal (103);
modulating the first network subscriber signal (101) and the first portion of the second network subscriber signal (103) onto the first group of subcarriers using inverse Fourier transform to obtain a first multi-carrier signal; and
modulating the second portion of the second network subscriber signal (103) onto the second group of subcarriers using inverse Fourier transform to obtain a second multi-carrier signal;
wherein
a number of subcarriers allocated to the first network subscriber signal (101) is allocated to the second network subscriber signal (103) if an increased number of subcarriers is necessary to modulate the second network subscriber signal (103) and/or if a reduced number of subcarriers is sufficient to modulate the first network subscriber signal (101); transmitting a control signal indicating the allocation of the first group of subcarriers to the first network subscriber signal and/or the allocation of the second group of subcarriers to the second network subscriber signal; and generating an optical signal from the first multi-carrier signal and/or the second multi-carrier signal using an optical transmitter device (109, 111), wherein the optical transmitter device (109, 111) comprises a first optical converter (211) for converting the first multi-carrier signal into a first optical multi-carrier signal at a first carrier frequency, and a second optical converter (211) for converting the second multi-carrier signal into a second optical multi-carrier signal at a second carrier frequency.

11. A method of receiving a multi-carrier signal modulated according to the method of claim 10 in accordance with the OBM OFDM scheme, comprising:

filtering the multi-carrier signal using a reception filter that has an adjustable reception filter bandwidth; and adjusting a bandwidth of the reception filter in response to a control signal indicating a bandwidth of the multi-carrier signal.

12. A computer program, comprising a program code for performing the method according to claim 10 or 11 when the computer program is executed on a computer.

**Revendications**

1. Dispositif de réseau destiné à moduler une pluralité de signaux d'abonné, lesquels sont affectés à différents abonnés de réseau, selon le schéma de modulation OFDM, Orthogonal Frequency Division Multiplexing, multiplexage par répartition orthogonale de la fréquence, avec les caractéristiques suivantes :

un dispositif d'affectation (105) destiné à affecter un premier groupe de sous-porteuses à un premier signal d'abonné de réseau (101) et à affecter un deuxième groupe de sous-porteuses à un deuxième signal d'abonné de réseau (103) ou destiné à affecter le premier groupe de sous-porteuses au premier signal d'abonné de réseau (101) et à une première partie du deuxième signal d'abonné de réseau (103) et à affecter le deuxième groupe de sous-porteuses à une deuxième partie du deuxième signal d'abonné de réseau (103) ; un dispositif de modulation (107) destiné à moduler le premier signal d'abonné de réseau (101) sur le premier groupe de sous-porteuses au moyen de la transformée de Fourier inverse, afin d'obtenir un premier signal à porteuses multiples, et à moduler le deuxième signal d'abonné de réseau (103) sur le deuxième groupe de sous-porteuses au moyen de la transformée de Fourier inverse, afin d'obtenir un deuxième signal à porteuses multiples, ou destiné à moduler le premier signal d'abonné de réseau (101) et la première partie du deuxième signal d'abonné de réseau (103) sur le premier groupe de sous-porteuses au moyen de la transformée de Fourier inverse, afin d'obtenir un premier signal à porteuses multiples, et à moduler la deuxième partie du deuxième signal d'abonné de réseau (103) sur le deuxième groupe de sous-porteuses au moyen de la transformée de Fourier inverse, afin d'obtenir un deuxième signal à porteuses multiples, où le dispositif d'affectation (105) est conçu pour affecter un nombre de sous-porteuses affectées au premier signal d'abonné de réseau (101) au deuxième signal d'abonné de réseau (103), au cas où un nombre accru de sous-porteuses serait nécessaire pour moduler le deuxième signal d'abonné de réseau (103), et/ou au cas où un nombre réduit de sous-porteuses serait suffisant pour moduler le premier signal d'abonné de réseau (101), et où le dispositif de réseau est conçu pour moduler la pluralité des signaux d'abonné de réseau (101, 103) selon le schéma OBM-OFDM, Orthogonal Band Multiplexed OFDM, et où le dispositif de réseau est conçu en outre pour émettre un signal de commande, qui affiche l'affectation du premier groupe de sous-porteuses au premier signal d'abonné de réseau (101) et/ou l'affectation du deuxième groupe de sous-porteuses au deuxième signal d'abonné de réseau (103) ; un dispositif d'émission optique (109, 111) destiné à produire un signal optique à partir du premier signal à porteuses multiples et/ou du deuxième signal à porteuses multiples, où le dispositif d'émission optique (109, 111) comprend un premier convertisseur optique (211) destiné à convertir le premier signal à porteuses multiples en un premier signal optique à porteuses multiples sur une première fréquence porteuse, et un deuxième convertisseur optique (211) destiné à convertir le deuxième signal à porteuses multiples en un deuxième signal optique à porteuses multiples sur une deuxième fréquence porteuse.

**2.** Dispositif de réseau selon la revendication 1, dans lequel le premier groupe de sous-porteuses et le deuxième groupe de sous-porteuses présentent respectivement des sous-porteuses successives.

**3.** Dispositif de réseau selon l'une quelconque des revendications précédentes, dans lequel le dispositif de modulation (105) présente un premier modulateur OFDM (205) destiné à moduler le premier signal d'abonné de réseau (101) et un deuxième modulateur OFDM (207) destiné à moduler le deuxième signal d'abonné de réseau (103).

**4.** Dispositif de réseau selon l'une quelconque des revendications précédentes, dans lequel le dispositif d'affectation (105) est conçu pour déterminer un nombre de sous-porteuses du premier groupe de sous-porteuses et/ou un nombre de sous-porteuses du deuxième groupe de sous-porteuses à l'intérieur d'un nombre total prédéfini de sous-porteuses.

**5.** Dispositif de réseau selon l'une quelconque des revendications précédentes, dans lequel le premier groupe et/ou le deuxième groupe de sous-porteuses présentent un nombre de sous-porteuses qui définit une largeur de bande de fréquences, laquelle correspond à une largeur de bande de fréquences d'un filtre de réception électrique pouvant recevoir le premier signal à porteuses multiples.

**6.** Dispositif de réseau, en particulier système de réseau, destiné à recevoir un signal à porteuses multiples modulé selon le schéma OBM-OFDM au moyen d'un dispositif de réseau selon l'une quelconque des revendications 1 à 5, avec :

un filtre de réception avec une largeur de bande de filtre de réception réglable ; et
un dispositif de commande, lequel est conçu pour régler la largeur de bande de filtre de réception du filtre de réception en réponse à un signal de commande, qui indique une largeur de bande du signal à porteuses multiples.

**7.** Dispositif de réseau selon la revendication 6, dans lequel le dispositif de commande est conçu pour recevoir le signal de commande.

**8.** Dispositif de réseau selon la revendication 6 ou 7, dans lequel le filtre réglable est un filtre antirepliement.

**9.** Dispositif de réseau selon la revendication 6, 7 ou 8, dans lequel le signal à porteuses multiples est un signal optique à porteuses multiples sur une fréquence porteuse, et où le dispositif de réseau présente en outre une diode accordable destinée à sélectionner la fréquence porteuse.

**10.** Procédé pour moduler une pluralité de signaux d'abonné, lesquels sont affectés à différents abonnés de réseau, selon le schéma de modulation OBM-OFDM, Orthogonal Band Multiplexed-Orthogonal Frequency Division Multiplexing, multiplexage par répartition orthogonale de la fréquence, avec les caractéristiques suivantes :

l'affectation d'un premier groupe de sous-porteuses à un premier signal d'abonné de réseau (101),
l'affectation d'un deuxième groupe de sous-porteuses à un deuxième signal d'abonné de réseau (103),
la modulation du premier signal d'abonné de réseau (101) sur le premier groupe de sous-porteuses au moyen de la transformée de Fourier inverse, afin d'obtenir un premier signal à porteuses multiples, et
la modulation du deuxième signal d'abonné de réseau (103) sur le deuxième groupe de sous-porteuses au moyen de la transformée de Fourier inverse, afin d'obtenir un deuxième signal à porteuses multiples,
ou
l'affectation du premier groupe de sous-porteuses au premier signal d'abonné de réseau (101) et à une première partie du deuxième signal d'abonné de réseau (103),
l'affectation d'un deuxième groupe de sous-porteuses à une deuxième partie du deuxième signal d'abonné de réseau (103) ;
la modulation du premier signal d'abonné de réseau (101) et de la première partie du deuxième signal d'abonné de réseau (103) sur le premier groupe de sous-porteuses au moyen de la transformée de Fourier inverse, afin d'obtenir un premier signal à porteuses multiples, et
la modulation de la deuxième partie du deuxième signal d'abonné de réseau (103) sur le deuxième groupe de sous-porteuses au moyen de la transformée de Fourier inverse, afin d'obtenir un deuxième signal à porteuses multiples, où
un nombre de sous-porteuses affectées au premier signal d'abonné de réseau (101) sont affectées au deuxième signal d'abonné de réseau (103), au cas où un nombre accru de sous-porteuses serait nécessaire pour moduler le deuxième signal d'abonné de réseau (103), et/ou au cas où un nombre réduit de sous-porteuses serait suffisant pour moduler le premier signal d'abonné de réseau (101),
l'émission d'un signal de commande, qui indique l'affectation du premier groupe de sous-porteuses au premier signal d'abonné de réseau et/ou l'affectation du deuxième groupe de sous-porteuses au deuxième signal d'abonné de réseau et

la production d'un signal optique à partir du premier signal à porteuses multiples et/ou du deuxième signal à porteuses multiples avec un dispositif d'émission optique (109, 111), où le dispositif d'émission optique (109, 111) comprend un premier convertisseur optique (211) destiné à convertir le premier signal à porteuses multiples en un premier signal optique à porteuses multiples sur une première fréquence porteuse, et un deuxième convertisseur optique (211) destiné à convertir le deuxième signal à porteuses multiples en un deuxième signal optique à porteuses multiples sur une deuxième fréquence porteuse.

11. Procédé de réception d'un signal à porteuses multiples modulé selon le schéma OBM-OFDM d'après le procédé selon la revendication 10, avec :

filtrage du signal à porteuses multiples au moyen d'un filtre de réception avec une largeur de bande de filtre de réception réglable ; et réglage d'une largeur de bande du filtre de réception en réponse à un signal de commande, qui indique une largeur de bande du signal à porteuses multiples.

12. Programme informatique avec un code de programme pour exécuter le procédé selon la revendication 10 ou 11, lorsque le programme informatique est exécuté sur un ordinateur.

Fig. 1

Fig. 2

a)

b) Zeitbereichsbetrachtung

Eingang:

Rundenlaufzeit 1:

Rundenlaufzeit L-1:

Rundenlaufzeit L:

c)

Fig. 3

## 403

## 401

## 301

Laser

$\lambda_1$

RFC

RF$_1$

## 405

RF$_2$

## 406

unmodulierte,
orthogonale,
grob verteilte
WDM-Träger

unmodulierte,
orthogonale,
dichtverteilte
WDM-Träger

$\Delta f_{high}$

$\Delta f_{low}$

$\lambda_1$          $\lambda_2$                    $\lambda_{L-1}$      $\lambda_L$

# Fig. 4

Fig. 5

Fig. 6

EP 2 271 013 B1

Fig. 7

Fig. 8

Fig. 9

EP 2 271 013 B1

Senke A

OFDM- inverse Singalver- arbeitung

ADC

ADC

Elektrisch. Anti-Alias Filter

Re

Im

90° Optischer Hybrid

verstimmbare Laserdiode

Optischer Anti-Alias Filter

einstellbares optisches Filter, Bandbreite = maximale ONU Bandbreite

LO

λ

Optisches Spektrum

Elektrisches Spektrum

f

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008112685 A1
- US 2009097852 A1

**In der Beschreibung aufgeführte Nicht-Patentliteratur**

- Experimental Demonstration and Numerical Simulation of 107-Gb/s High Spectral Efficiency Coherent Optical OFDM. **QI YANG et al.** JOURNAL OF LIGHTWAVE TECHNOLOGY. IEEE SERVICE CENTER, 01. Februar 2009, vol. 27, 168-176